# EUROPEAN PATENT SPECIFICATION

(11) **EP 2 748 460 B1**
(45) Date of publication and mention of the grant of the patent: **03.06.2015**
(21) Application number: 12753580.5
(22) Date of filing: 21.08.2012
(51) Int. Cl.: F03D 1/00

(54) **TOWER SECTION ALIGNMENT APPARATUS AND SYSTEM**
VORRICHTUNG UND SYSTEM ZUR AUSRICHTUNG VON TURMABSCHNITTEN
APPAREIL ET SYSTÈME D'ALIGNEMENT DE SECTION DE TOUR

(30) Priority: 24.08.2011 GB 201114647
(43) Date of publication of application: 02.07.2014
(73) Proprietor: Technip France, 92400 Courbevoie (FR)
(72) Inventor: SPENCE, Ross, Aberdeen Aberdeenshire AB24 1XE (GB); RUSSELL, James, Newcastle-upon-Tyne NE3 5RA (GB)
(74) Representative: Earnshaw, Geoffrey Mark
(86) International application number: PCT/GB2012/052039
(87) International publication number: WO 2013/027048

(56) References cited:
- EP-A1- 1 227 204
- WO-A1-2012/034564
- WO-A2-2011/009538
- DE-A1-102009 051 425
- US-A1- 2009 169 393

## Description

The present invention relates an alignment apparatus for installing tower sections to form a tower and, in particular, for installing wind turbine tower sections to form a wind turbine tower and for installing a nacelle on top of the tower. The invention also describes an alignment system and method.

A known method for installing offshore wind turbine components having large internal bolted radial flange connections (as used in the tower-to-nacelle connection) is to lift the component, such as a tower section or nacelle, from a vessel deck into position using an installation vessel crane before carefully lowering the component down into the approximate position over a corresponding pre-installed component. This is made particularly difficult by wind, wave and tidal conditions frequently experienced offshore. Human error is an additional risk.

Personnel are undesirably located inside the lower tower section or transition piece, for example, to manually guide the component to be installed into position while maintaining communication with the vessel crane operator. The bolt holes on corresponding components must then be manually aligned before a number of retaining bolts are installed and tightened to allow the crane to be released and removed. The personnel located inside the lower component during installation are at high risk of injury or worse.

A similar process is conducted during onshore pre-assembly of similar components, although such operations are less affected by wind, wave and tidal conditions, and therefore do not have the same time constraints as offshore installation. However, personnel must also be inside the existing tower section to perform alignment and guidance of the component to be installed which undesirably exposes them to similar risks associated with operating in a confined space, dropped objects and manually handling a heavy 'live' load.

Also, there is the potential that the components being installed could be damaged due to sudden movement caused by environmental factors or inadvertent crane movement. In addition, as such bolted flange connections are machined surfaces with applicable tolerances, localised damage to such a surface may deem the component unsuitable for installation. The crane operator must therefore be highly skilled and an offshore installation vessel must be dynamically very stable to allow for precise positioning of the components to be installed to avoid the effects of wave-induced motion affecting the crane and its load.

Known installation methods are therefore undesirably slow, unsafe and expensive.

WO2011/009538A2 shows a system for assembling components of a wind turbine, in which a connecting device, a transport beam and transport frame are provided. The connecting device comprises two corresponding elements which provide guide elements and receiving elements.

A first aspect of the present invention provides an alignment apparatus for aligning a first component having an internal flange at one end with a second corresponding component, comprising:
- a support part;
- at least one attachment part for mounting the support part inside the first component; and
- an elongate guide member mounted at a first end to the support part and having a free second end, wherein the guide member is adapted to extend through the internal flange of the first component and beyond the end thereof for engagement with the internal flange of the second corresponding component during alignment; characterised in that the guide arm is pivotally mounted at the first end to the support part about a horizontal pivot axis.

In use, the support part is mounted inside the first component so that the guide member extends through the internal flange of the first component and beyond the end thereof. The guide member extends from the support part towards the longitudinal axis of the first component thereby to provide a guide surface for engagement with the second component. The first component, such as a cylindrical tower section, is lifted in vertical orientation by suitable means, such as a crane, so that the guide member is extending from a lower end thereof. The first component is manoeuvred and positioned above the second corresponding component and is then lowered towards the same for engagement therewith. Axial misalignment is expected, particularly in an offshore environment where wind, wave and tidal conditions make alignment particularly difficult, and as a result of human error. However, in accordance with the present invention, the free end of the guide member extends inside the correspondingly flanged end of the second component and on further lowering the guide member engages with the flange of the second component to guide and align the first component into position. When aligned, the first and second components can be connected by suitable fasteners and the crane released and removed. The apparatus may then be detached from the first component. Advantageously, no personnel are required inside the second component during alignment and engagement of the first component therewith and alignment of the components is made quicker and safer and is therefore less expensive.

Preferably the guide member extends at an angle from the support part towards a longitudinal axis of the first component. This provides an angled guide surface for improved guidance and alignment of the first component with the second component.

The guide member is a guide arm, and the guide arm is pivotally mounted at the first end to the support part about a horizontal pivot axis. This allows the guide arm to rotate in a vertical plane on engagement with the second component during installation. Such movement prevents damage to the second component. Suitably the free second end of the guide member may be pointed.

Preferably the apparatus further comprises a coupling member connecting the guide member to the support part. This provides additional rigidity to the apparatus. Preferably the coupling member is elongate and extends from the support part to attach between the first and second ends of the guide member. Preferably the coupling member is pivotally attached to the support part and guide member.

Preferably the coupling member is adjustable in length to accommodate movement of the guide member towards or away from the support part. Suitably the coupling member may comprise two parts moveable relative to each other to provide the adjustment. The two parts may slideably connect. They may be telescopic, for example. Suitably the coupling member may be lockable to fix a desired length of the same and thereby also a position of the guide member relative to the support part. This may be desirable for installing components having different flange bore diameters, for example, depending on their application.

Suitably the coupling member may comprise resilient means to provide such adjustment. Such resilient means may comprise a spring. Suitably the spring may be a tension spring which urges the guide member towards the support part. Alternatively or additionally, the coupling member may comprise a pneumatic and/or hydraulic damper. This arrangement provides the apparatus with a damper so that engagement of the guide member with the second component during installation is dampened to reduce impact loading thereon and prevent damage thereto. Providing a damper also ensures the size and weight of the apparatus is kept to a minimum.

Suitably the apparatus may further comprise a linking member connecting the guide member to the support part. This may provide additional strength and rigidity to the apparatus. Preferably the linking member is elongate and pivotally connected to the support part and guide member. Preferably the linking member extends from the support part to attach between the coupling member and the second end of the guide member. Suitably the linking member maybe adapted to engage with the second component when in use to act as a further guide.

Preferably the apparatus comprises an alignment pin mounted on the support part and adapted to pass through and extend downwardly from a flange bolt hole of the first component when the apparatus is mounted therein. This provides a mounting point for the apparatus on the first component. The alignment pin is thereby received by a corresponding flange bolt hole of the second component when offered up to and engaged with the second component. This therefore provides additional alignment during installation of the first component onto the second component and ensures additional alignment or realignment of the components is not required. Such bolt holes may be one of a plurality of bolt holes provided on the flanges of the first and second components otherwise used for bolting the two components together.

Preferably the apparatus comprises urging means to urge the alignment pin towards the second component when in use whilst allowing for movement of the pin in a longitudinal direction. This allows the pin to move longitudinally if engaged with the second component to prevent damage to the same and to the pin itself until a bolt hole is found and engaged. Such urging means may comprise a spring.

Suitably the attachment part may comprise at least one magnet to allow the apparatus to be easily attached to and detached from the inside of the first component. Alternatively, where the first component is non-magnetic, such as a plastics material, the attachment part may comprise a sucker, for example. Desirably both these types of attachment part are non-intrusive and thereby do not compromise the integrity of the first component. However, any suitable attachment part may be used.

Preferably the support part is adapted to attach to the inside wall and internal flange of the first component. Therefore, if the first component is substantially cylindrical having a radial internal flange, the support part may be correspondingly curved to engage with the curved inner wall of the first component. Alternatively, the support part may be shaped to engage with a flat wall of a square or rectangular sectioned first component.

Preferably the support part is L-shaped comprising a vertical portion for attaching to the inner wall of the first component and a horizontal portion for attaching to the inner flange of the first component. Preferably the guide member attaches at or near a free end of the vertical portion of the support part. Preferably the coupling member attaches to the support part where the vertical and horizontal portions join. Preferably the linking member attaches to a free end of the horizontal portion of the support part. Preferably the alignment pin extends downwardly from the horizontal portion of the support part.

Suitably the support part may further comprise a lip adapted to engage a vertical inner surface of the flange of the first component. This provides further support to the apparatus when mounted on the first component particularly in an outward lateral direction relative to a longitudinal axis of the first component.

Suitably the apparatus may be a metals material such as steel. Preferably the apparatus is corrosion resistant, particularly important in an offshore environment where salt water corrosion is prevalent. Such corrosion resistance may be provided by powder coating, for example.

The invention can provide an alignment system comprising at least two alignment apparatus as described above. Preferably two apparatus are mountable opposite each other on the inside of the first component to provide balanced alignment and guidance of the first component with the second component. Preferably the system comprises at least three apparatus mountable around the inside flange of a first cylindrical component. Such apparatus would preferably be spaced by 120 degrees relative to each other about a longitudinal axis of the first component. This arrangement provides suitable alignment and guidance when the first component is being aligned with the second component.

The present invention can also provide a method of aligning and engaging a first flanged component with a second correspondingly flanged component, the method comprising the steps of:
- providing at least two alignment apparatus as described above;
- attaching the support part of each apparatus to the inside of the first component proximal to an internal flange and lower end in use thereof so that the apparatus are arranged opposite each other relative to a longitudinal axis of the first component;
- lifting the first component and positioning over the second component;
- lowering the first component towards the flange of the second component;
- engaging the guide member of at least one of the alignment apparatus with the flange of the second component to force alignment of the first component therewith; and
- lowering the first component to engage in alignment with the second component.

The method may further comprise the following steps:
- engaging an alignment pin of each apparatus into a flange bolt hole of the first component to extend outwardly therefrom; and
- aligning the projecting alignment pins with corresponding flange bolt holes of the second component thereby to align the flange bolt holes of the first and second components.

An embodiment of the present invention will now be described by way of example only with reference to the accompanying drawings in which:

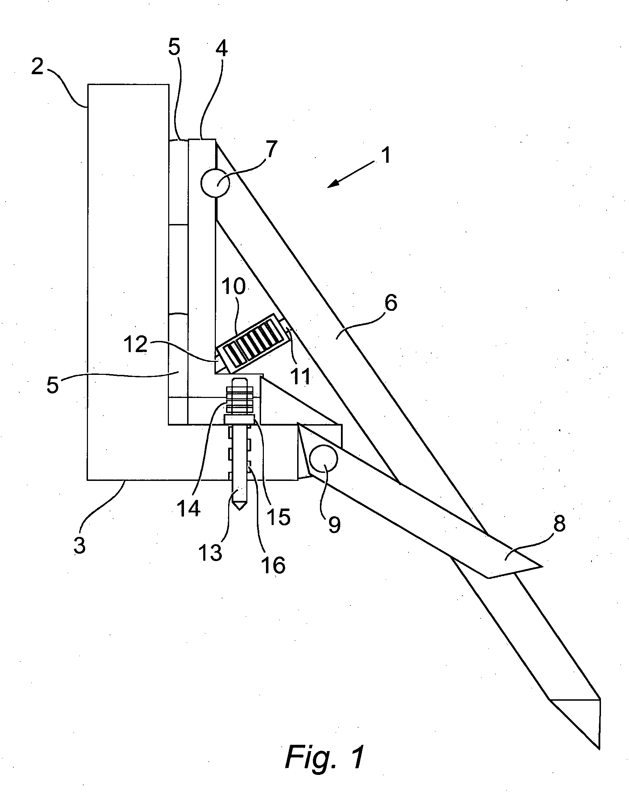

- Figure 1 shows an alignment apparatus;

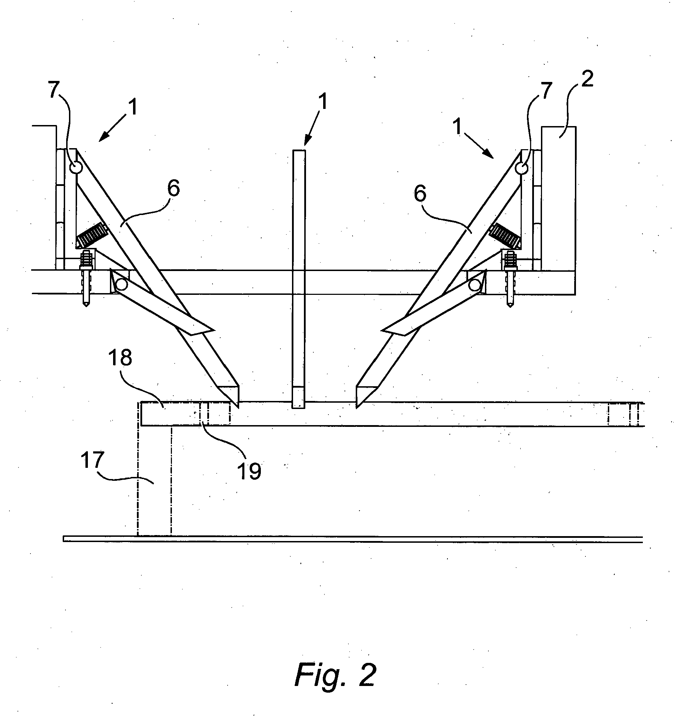

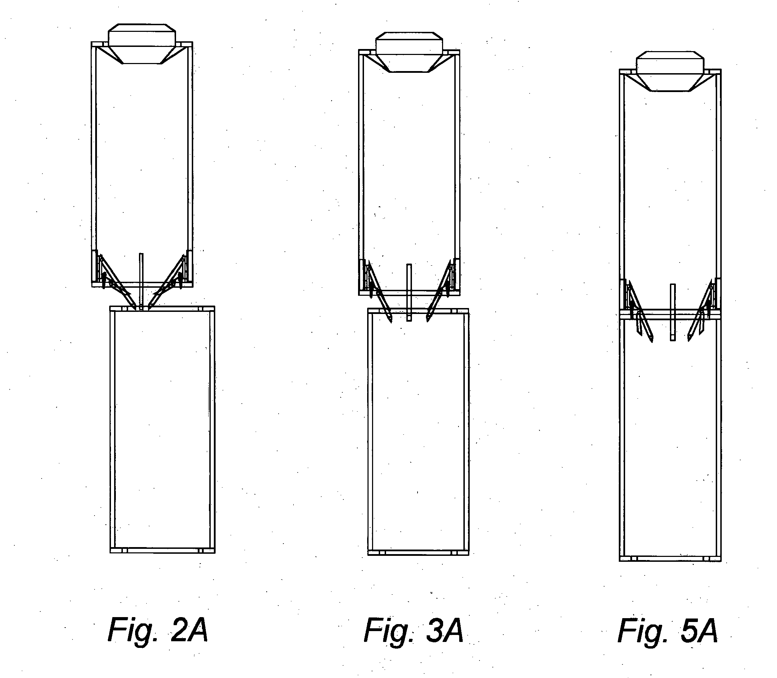

- Figures 2 and 2A show an alignment system mounted comprising three alignment apparatus mounted inside a first tower section being lowered towards a second tower section;

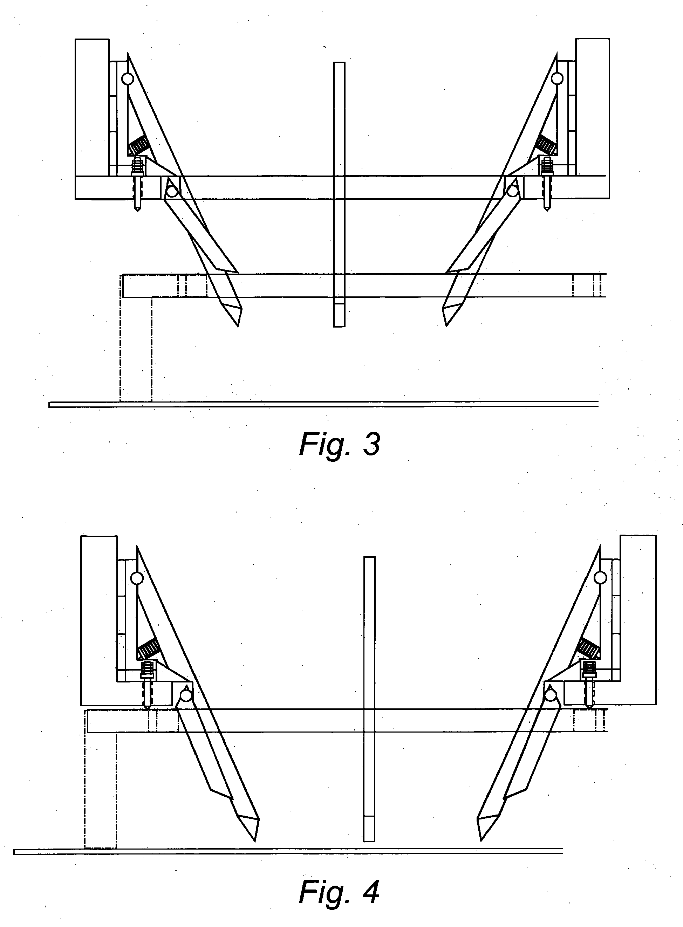

- Figures 3 and 3A show the alignment system guiding and aligning the first tower section with the second tower section;
- Figure 4 shows the final stages of alignment; and

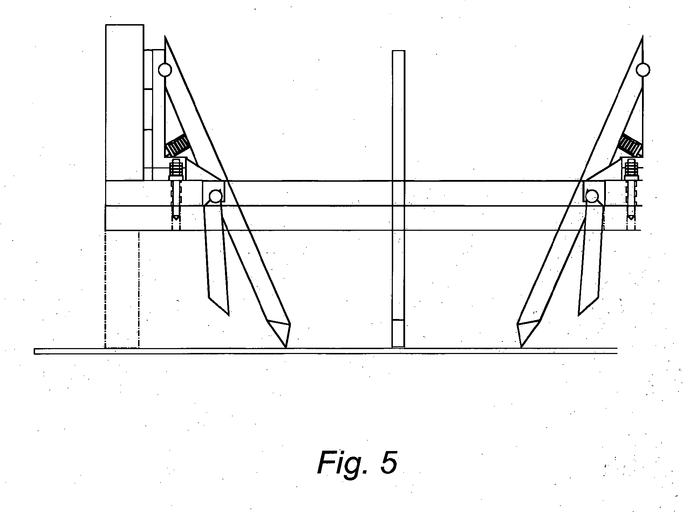

- Figures 5 and 5A show the first and second components fully aligned and engaged with the alignment pins of each apparatus inserted into corresponding bolt holes of the second component.

As shown in the Figures, the alignment system comprises at least three alignment apparatus which is particularly effective for use with substantially cylindrical tower sections having radial internal flanges.

Each apparatus 1 is mounted to the internal bottom flange 3 of the tower section 2 to be lifted and installed on the top flange 18 of the tower section 17. The position between each guidance unit 1 is about 120 degrees. A support part 4 is detachably mounted to the internal bottom flange 3 and to the internal face of the tower section 2 by means of attachment parts 5.

A retracting alignment pin 13 is mounted to the support part and extends downwardly through a flange bolt hole 16 of the flange 3. A spring 14 between a collar 15 urges the alignment pin 13 away from the support part 4. The alignment pin is used to ensure that the flange bolt holes of both tower sections 2 and 17 of the connection flange 3 and 18 are correctly aligned such that additional alignment / re-alignment operations are not required. The spring 14 assists the alignment pin 13 such that it can be depressed back in towards the flange 3 on engagement with the flange 18 of the lower tower section 17. This helps prevent the possibility of snagging and damage to the pin or second tower section during installation. The alignment pin diameter is sized such that is sufficient to allow accurate alignment of the bolt holes whilst being smaller than the diameter of the bolt holes themselves 16 and 19 to ensure free movement.

A guide arm 6 is mounted on a pivot or hinged connection 7 on the top of the support part 4 to permit movement about a horizontal pivot axis during contact with the other flange connection. A damper arrangement 10 is connected to the support part 4 at an articulated point 12 and to the guide arm 6 by a second articulated point 11. This is used to control the rotational movement of the guide arm of each alignment apparatus 1. The damper assembly 10 includes a tensioned spring with integral hydraulic or gas-filled dampers to allow increased control of the guide arm 6. The damper arrangement may also be hydraulic or pneumatic. The damper assembly 10 serves to reduce the impact loadings imposed on both the apparatus and on the wind turbine section 2 being installed. The reduction in such impact loadings through the apparatus allows for components of the system to be reduced in size and weight. The damper assembly 10 may also be used to allow the guide arm 6 to be locked/latched in a pre-set condition. A second guide arm 8 can used and is mounted on a pivot connection 9 on the bottom of the support part 4.

After alignment and engagement of the tower sections, flange bolt insertion can be safely made by the installation personnel and lifting equipment may then be removed. The system may also be removed and reused for further installations.

## Claims

1. An alignment apparatus (1) for aligning a first component (2) having an internal flange (3) at one end with a second corresponding component (17), comprising:
- a support part (4);
- at least one attachment part (5) for mounting the support part inside the first component; and
- an elongate guide member (6) mounted at a first end to the support part and having a free second end, wherein the guide member is adapted to extend through the internal flange of the first component and beyond the end thereof for engagement with the internal flange of the second corresponding component during alignment;
**characterised in that** the guide member is a guide arm, and the guide arm is pivotally mounted at the first end to the support part about a horizontal pivot axis.

2. An apparatus according to claim 1 wherein the guide member (6) extends at an angle from the support part (4) towards a longitudinal axis of the first component (2).

3. An apparatus according to any preceding claim further comprising a coupling member connecting the guide member (6) to the support part (4).

4. An apparatus according to claim 3 wherein the coupling member is elongate and extends from the support part (4) to attach between the first and second ends of the guide member (6).

5. An apparatus according to claim 4 wherein the coupling member is pivotally attached to the support part (4) and guide member (6).

6. An apparatus according to claim 5 wherein the coupling member is adjustable in length to accommodate movement of the guide member (6) towards or away from the support part (4).

7. An apparatus according to claim 5 or 6 wherein the coupling member is lockable to fix a desired length of the same and thereby also a position of the guide member (6) relative to the support part (4).

8. An apparatus according to claim 7 wherein the coupling member comprises a spring to provide such adjustment.

9. An apparatus according to claim 8 wherein the spring is a tension spring which urges the guide member (6) towards the support part (4).

10. An apparatus according to claim 9 wherein the coupling member further comprises a pneumatic and/or hydraulic damper (10).

11. An apparatus according to any preceding claim further comprising a linking member (8) connecting the guide member (6) to the support part (4).

12. An apparatus according to claim 11 wherein the linking member is elongate and pivotally connected to the support part (4) and guide member (6), and the linking member extends from the support part to attach between the coupling member and the second end of the guide member.

13. An apparatus according to claim 12 wherein the linking member (8) is adapted to engage with the second component (17) when in use to act as a further guide.

14. An apparatus according to any preceding claim further comprising an alignment pin (13) mounted on the support part (4) and adapted to pass through and extend downwardly from a flange bolt hole (16) of the first component (2) when the apparatus is mounted therein.

15. An apparatus according to claim 14 comprises a spring (14) to urge the alignment pin (13) towards the second component (17) when in use whilst allowing for movement of the pin in a longitudinal direction.

## Patentansprüche

1. Eine Ausrichtungsvorrichtung (1) zum Ausrichten einer ersten Komponente (2), die an einem Ende einen inneren Flansch (3) aufweist, nach einer zweiten entsprechenden Komponente (17), beinhaltend:
- einen Stützteil (4);
- mindestens einen Anbringungsteil (5) zum Montieren des Stützteils im Inneren der ersten Komponente; und
- ein längliches Führungselement (6), das an einem ersten Ende an den Stützteil montiert ist und ein freies zweites Ende aufweist, wobei das Führungselement angepasst ist, um sich durch den inneren Flansch der ersten Komponente und über das Ende davon hinaus zu erstrecken, zum Eingriff in den inneren Flansch der zweiten entsprechenden Komponente während der Ausrichtung;
**dadurch gekennzeichnet, dass** das Führungselement ein Führungsarm ist und der Führungsarm an dem ersten Ende schwenkbar um eine horizontale Schwenkachse an den Stützteil montiert ist.

2. Vorrichtung gemäß Anspruch 1, wobei sich das Führungselement (6) in einem Winkel von dem Stützteil (4) zu einer Längsachse der ersten Komponente (2) hin erstreckt.

3. Vorrichtung gemäß einem der vorhergehenden Ansprüche, die ferner ein Kopplungselement beinhaltet, das das Führungselement (6) mit dem Stützteil (4) verbindet.

4. Vorrichtung gemäß Anspruch 3, wobei das Kopplungselement länglich ist und sich von dem Stützteil (4) erstreckt, um zwischen dem ersten und zweiten Ende des Führungselements (6) angebracht zu werden.

5. Vorrichtung gemäß Anspruch 4, wobei das Kopplungselement schwenkbar an dem Stützteil (4) und dem Führungselement (6) angebracht ist.

6. Vorrichtung gemäß Anspruch 5, wobei das Kopplungselement längeneinstellbar ist, um eine Bewegung des Führungselements (6) zum Stützteil (4) hin oder von ihm weg zu ermöglichen.

7. Vorrichtung gemäß Anspruch 5 oder 6, wobei das Kopplungselement blockierbar ist, um eine gewünschte Länge desselben und dadurch auch eine Position des Führungselements (6) relativ zum Stützteil (4) zu fixieren.

8. Vorrichtung gemäß Anspruch 7, wobei das Kopplungselement eine Feder beinhaltet, um eine derartige Einstellung bereitzustellen.

9. Vorrichtung gemäß Anspruch 8, wobei die Feder eine Zugfeder ist, die das Führungselement (6) zum Stützteil (4) hin drängt.

10. Vorrichtung gemäß Anspruch 9, wobei das Kopplungselement ferner einen pneumatischen und/oder hydraulischen Dämpfer (10) beinhaltet.

11. Vorrichtung gemäß einem der vorhergehenden Ansprüche, die ferner ein Verknüpfungselement (8) beinhaltet, das das Führungselement (6) mit dem Stützteil (4) verbindet.

12. Vorrichtung gemäß Anspruch 11, wobei das Verknüpfungselement länglich ist und schwenkbar mit dem Stützteil (4) und dem Führungselement (6) verbunden ist, und wobei sich das Verknüpfungselement von dem Stützteil erstreckt, um zwischen dem Kopplungselement und dem zweiten Ende des Führungselements angebracht zu werden.

13. Vorrichtung gemäß Anspruch 12, wobei das Verknüpfungselement (8) angepasst ist, um bei Gebrauch in die zweite Komponente (17) einzugreifen, um als eine weitere Führung zu wirken.

14. Vorrichtung gemäß einem der vorhergehenden Ansprüche, die ferner einen Ausrichtungsstift (13) beinhaltet, der auf dem Stützteil (4) montiert ist und angepasst ist, um durch ein Flanschbolzenloch (16) der ersten Komponente (2) durchzugehen und sich davon nach unten zu erstrecken, wenn die Vorrichtung darin montiert ist.

15. Vorrichtung gemäß Anspruch 14 beinhaltet eine Feder (14), um den Ausrichtungsstift (13) bei Gebrauch zur zweiten Komponente (17) hin zu drängen, während die Bewegung des Stiftes in einer Längsrichtung gestattet wird.

## Revendications

1. Un appareil d'alignement (1) pour aligner un premier composant (2) présentant une bride interne (3) au niveau d'une extrémité avec un deuxième composant (17) correspondant, comprenant :
- une partie de support (4) ;
- au moins une partie d'attache (5) pour monter la partie de support à l'intérieur du premier composant ; et
- un élément guide allongé (6) monté au niveau d'une première extrémité sur la partie de support et présentant une deuxième extrémité libre, où l'élément guide est conçu pour s'étendre à travers la bride interne du premier composant et au-delà de l'extrémité de celui-ci pour se mettre en prise avec la bride interne du deuxième composant correspondant pendant l'alignement ;
**caractérisé en ce que** l'élément guide est un bras guide, et le bras guide est monté de manière pivotante au niveau de la première extrémité sur la partie de support autour d'un axe de pivotement horizontal.

2. Un appareil selon la revendication 1 où l'élément guide (6) s'étend en formant un angle à partir de la partie de support (4) en direction d'un axe longitudinal du premier composant (2).

3. Un appareil selon n'importe quelle revendication précédente comprenant en sus un élément de couplage raccordant l'élément guide (6) à la partie de support (4).

4. Un appareil selon la revendication 3 où l'élément de couplage est allongé et s'étend à partir de la partie de support (4) pour s'attacher entre les première et deuxième extrémités de l'élément guide (6).

5. Un appareil selon la revendication 4 où l'élément de couplage est attaché de manière pivotante sur la partie de support (4) et l'élément guide (6).

6. Un appareil selon la revendication 5 où l'élément de couplage est ajustable en longueur afin de s'adapter à un déplacement de l'élément guide (6) en direction de ou à l'écart de la partie de support (4).

7. Un appareil selon la revendication 5 ou la revendication 6 où l'élément de couplage est verrouillable afin de fixer une longueur souhaitée de celui-là même et de ce fait également une position de l'élément guide (6) relativement à la partie de support (4).

8. Un appareil selon la revendication 7 où l'élément de couplage comprend un ressort afin de procurer un tel ajustement.

9. Un appareil selon la revendication 8 où le ressort est un ressort de tension qui pousse l'élément guide (6) en direction de la partie de support (4).

10. Un appareil selon la revendication 9 où l'élément de couplage comprend en sus un amortisseur pneumatique et/ou hydraulique (10).

11. Un appareil selon n'importe quelle revendication précédente comprenant en sus un élément de liaison (8) raccordant l'élément guide (6) à la partie de support (4).

12. Un appareil selon la revendication 11 où l'élément de liaison est allongé et raccordé de manière pivotante à la partie de support (4) et l'élément guide (6), et l'élément de liaison s'étend à partir de la partie de support pour s'attacher entre l'élément de couplage et la deuxième extrémité de l'élément guide.

13. Un appareil selon la revendication 12 où l'élément de liaison (8) est conçu pour se mettre en prise avec le deuxième composant (17) lors de l'utilisation afin de faire office de guide supplémentaire.

14. Un appareil selon n'importe quelle revendication précédente comprenant en sus une goupille d'alignement (13) montée sur la partie de support (4) et conçue pour passer à travers un trou de boulon de bride (16) du premier composant (2) et s'étendre vers le bas à partir de celui-ci lorsque l'appareil est monté dedans.

15. Un appareil selon la revendication 14 comprend un ressort (14) afin de pousser la goupille d'alignement (13) en direction du deuxième composant (17) lors de l'utilisation tout en autorisant un déplacement de la goupille dans une direction longitudinale.
